# EUROPEAN PATENT SPECIFICATION

(11) **EP 1 611 947 B1**
(45) Date of publication and mention of the grant of the patent: **10.01.2018**
(21) Application number: 05013113.5
(22) Date of filing: 17.06.2005
(51) Int. Cl.: B01J 19/02, B01J 3/00

(54) **TWO PARTS APPARATUS WITH DIFFERENT LININGS**
ZWEITEILIGE VORRICHTUNG MIT ZWEI AUSKLEIDUNGEN
APPAREIL EN DEUX PARTIES AVEC DEUX REVÊTEMENTS

(30) Priority: 21.06.2004 IT MI20041240
(43) Date of publication of application: 04.01.2006
(73) Proprietor: 3V GREEN EAGLE S.P.A., 20121 Milano (IT)
(72) Inventor: Evangelisti, Ivano, 24129 Bergamo (IT)
(74) Representative: Modiano, Micaela Nadia

(56) References cited:
- FR-A- 719 327
- GB-A- 878 254
- GB-A- 900 160
- GB-A- 2 150 152
- US-A- 3 284 159

## Description

The present invention relates to an apparatuses particularly for oxidation processes, that comprises a lining, wherein the oxidation process is advantageously a wet oxidation process.

Wet oxidation, also known as wet-phase oxidation, is a known oxidation process that allows to oxidize organic substances that are present in aqueous suspensions or solutions by using an oxidizer that is dissolved directly in the liquid phase without requiring prior evaporation of the water.

More particularly, the process according to the invention is based on performing oxidation of the substances that are present in the aqueous phase with air, pure oxygen or mixtures of air and oxygen in an environment that provides high pressures in combination with high temperatures.

The essential plant components for performing wet oxidation are generally a reactor in which the actual oxidation takes place, one or more heat exchangers for preheating the wastewater to be treated, bringing it to the temperature at which the oxidation reaction is triggered, and for cooling the treated effluent, and a pump for conveying at high pressure the wastewater into the reactor,

The materials most widely used to provide these plant components are chromium-nickel-molybdenum steels. However, for temperatures of 300 °C or higher, the risk of corrosion of these materials becomes highly significant, for example as a consequence of galvanic corrosion phenomena.

Another disadvantage of steels is constituted by the problems posed by their use in the treatment of wastewater that contains chlorides. It is in fact believed that the chlorides that are present are converted into HCl, which under pressure and at high temperature can easily lead to corrosion of steel linings.

In the field of oxidation processes, it is necessary to pay considerable attention to the resistance of the materials to a particularly aggressive type of corrosion known as stress crevice corrosion (SCC).

It has been demonstrated that this condition occurs commonly in many oxidation processes and particularly in wet oxidation, in which the parameters of the oxidation reaction assume, in crevices, an unpredictable behavior and become particularly aggressive for the components of the reactor.

The document US3284159 discloses an apparatus made of nickel alloy with a lining made of TiO₂. Even advanced materials such as nickel-chromium and nickel-chromium-molybdenum alloys do not have a satisfactory resistance to stress crevice corrosion, leading to a significant reduction of the average life of linings and to possible perforation of the reactor and to the easily imaginable risks linked thereto.

Alternative solutions have been found so far to be scarcely applicable. For example, titanium, despite having some advantages, has a significant obstacle in its reactivity.

It is in fact known well that titanium "burns" easily in an oxygen-rich atmosphere. This particularly dangerous condition must be taken into account in applying wet oxidation processes that use pure oxygen, as mentioned,

Currently, therefore, there is a clear perception of the inadequacy of existing solutions for achieving resistance to chemical corrosion, especially in the presence of chlorides and/or pure oxygen,

Accordingly, the aim of the present invention is to provide an apparatus comprising a lining for performing oxidation processes that overcomes the drawbacks of the background art.

An object of the invention is to provide an apparatus comprising a lining as above that allows to provide effectively and safely a wet oxidation process on wastewaters having a high content of chlorides and in drastic operating conditions.

This aim and these and other objects are achieved by an apparatus comprising a lining, particularly for performing oxidation processes, which lining is characterized in that it comprises at least two different metallic alloys, wherein a first alloy is selected from the group that comprises titanium and alloys thereof and a second alloy is selected from the group that comprises nickel alloys.

The present invention relates to an apparatus that comprises a lining, both as defined hereinafter. It is understood that any characteristic that is mentioned with reference to the lining but can be also referred to the apparatus is to be considered equally valid although it is not repeated explicitly,

The expression "titanium and alloys thereof" is used to refer to titanium of any grade, preferably titanium grades 1 to 4 (chemically pure titanium), titanium grades 7 to 11 (alloys of titanium, palladium, aluminum and vanadium) and titanium grade 45 (titanium-niobium alloys) and mixtures thereof. The referenced grades refer to the classification of nonferrous materials proposed by the ASME and ISPESL or by equivalent standards. Hereinafter, for the sake of convenience reference is made to titanium and alloys thereof also by using the simple term "titanium".

The expression "nickel alloys" preferably refers to a nickel-chromium alloy, even more preferably a nickel-chromium-molybdenum alloy. Among nickel-chromium alloys and nickel-chromium-molybdenum alloys, preferred alloys comprise alloys containing at least 30% nickel by weight, preferably in a percentage comprised between 30% and 75% by weight, Examples of preferred nickel alloys are selected from the group that comprises Sanicro® alloys, preferably Sanicro 28® (or NO8028), Incoloy® alloys, preferably NO8800, Inconel® alloys, preferably NO6600, Hastelloy® alloys, preferably NO10276, NO6022, NO6455 and NO6059, wherein the designations that are not referenced as trademarks refer to the international classification proposed by ASME. Hereinafter, for the sake of convenience nickel alloys will also be referenced by using the simple term "nickel".

Further characteristics and advantages of the invention will become better apparent from the description of preferred but not exclusive embodiments of the invention, illustrated by way of non-limiting example with reference to the accompanying drawings, wherein:

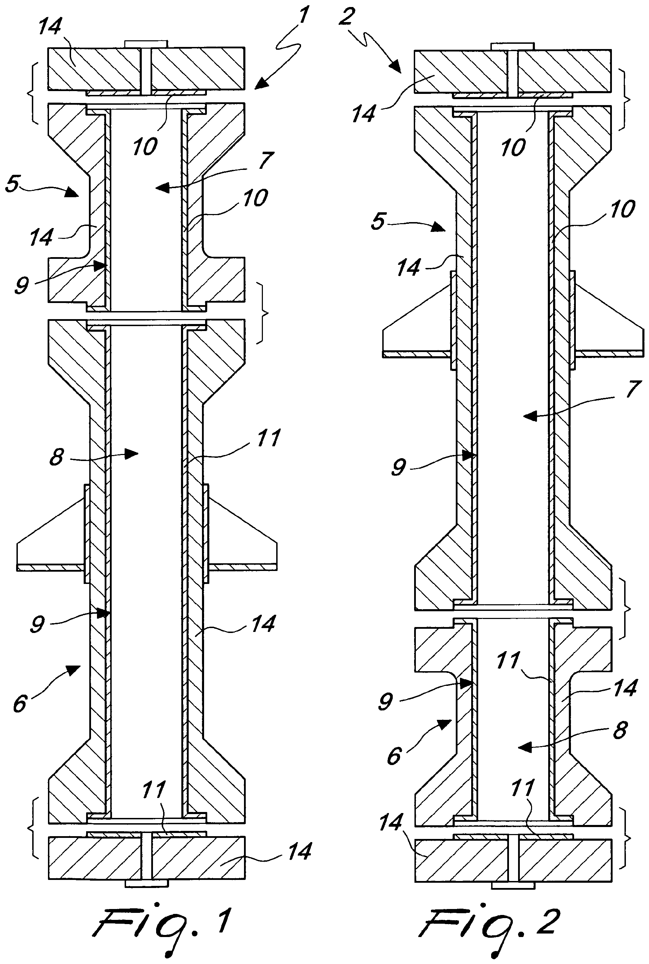

Figures 1 to 4 are exploded sectional views of apparatuses (reactors) of various kinds for performing oxidation processes, said apparatuses being internally plated with a lining, according to the invention.

In a first aspect, the present invention relates to apparatuses used to perform oxidation processes, preferably wet oxidation processes comprising a lining 9, said lining being characterized in that it comprises at least two different metallic alloys, preferably only two metallic alloys, wherein a first alloy is selected from the group that comprises titanium and alloys thereof and a second alloy is selected from the group that comprises nickel alloys.

Oxidation processes according to the disclosure are any chemical or electrochemical process, generally a highly corrosive one, that involves or generates agents that are capable of causing the chemical modification of a material with which said agents make contact, with or without gradual surface removal of said material. The oxidation process of the present invention is a wet oxidation process, even more preferably a wet oxidation process performed with pure oxygen.

In a preferred embodiment, the lining 9 is substantially constituted by non-overlapping surfaces 10 and 11 of suitable thickness, wherein a first surface 11 is preferably constituted by titanium or alloys thereof and a second surface 10 is preferably constituted by nickel alloys.

Advantageously, the thickness of the lining 9 is at least 0.75 mm and is preferably comprised between 0.75 and 12.7 mm, more preferably equal to 5 mm. The thickness of the layer may not be uniform in all the regions of the lining, despite remaining within the ranges cited above.

Advantageously, the lining is coupled to an optional substrate 14 by means of a generic anchoring method.

Advantageously, the substrate has a thickness comprised between 20 and 150 mm.

The anchoring step occurs according to any method known in the field for this purpose and in particular by plating, performed either by lamination or by explosion. The choice among the various application methods that are available is made subtantially depending on the substrate and the material to be applied and can be determined easily by means of routine experiments.

Advantageous examples of a substrate 14 on which the lining is anchored are metal sheets or forgings made of carbon steel, carbon-manganese steel or low-alloy steels having suitable mechanical characteristics, manufactured according to international standards, such as the ferrous materials classified by the ASME standards (ASME II part A),

The substrate, after being lined, can be processed adequately, producing an apparatus (1, 2, 3 or 4) or a device that advantageously constitute the final means for performing the oxidation process.

In another aspect, the disclosure relates to an element that comprises at least one lining 9 as defined above, which is anchored to a substrate 14 as defined above. Advantageously, both the lining and the substrate are in the form of laminated elements whose thickness is equal to what has been described earlier with reference to the two individual components.

Although the combination between the lining and the substrate is a particularly advantageous embodiment, if one so wishes it is possible to use the lining without a substrate.

More particularly, the term "apparatus" is used to designate a plant for performing an oxidation process, particularly wet oxidation processes, and more preferably the reactor or the set of reactors inside which the oxidation occurs physically. The term "reactors" includes both reactors that operate in continuous mode (individually or in series) and reactors operating in batch mode.

The term "apparatus" also designates the devices required to perform a conventional wet oxidation process, such as heat exchangers, vessels for collecting and separating the wastewater, pumps for feeding said wastewater under pressure, and adjustment means for changing the operating pressure inside the reactor.

According to the invention the portions that must be conveniently lined with the lining according to the invention are at least the onos designed to make contact with the reaction environment, which in the specific case of wet oxidation is the wastewater to be treated.

In a generic oxidation process, it has been found that titanium is advantageously used for the surfaces of the apparatuses that are exposed to a more corrosive environment, whereas nickel is used advantageously for the surfaces of the apparatuses that are most exposed to oxygen.

According to the particularly preferred embodiment in which the oxidation process is a wet oxidation process performed for example in a conventional reactor, the best results are achieved with titanium and nickel comprised in two physically separate layers 10 and 11, which are contiguous and combined in a single lining that is characterized in that the portion 11 made of titanium or alloys thereof lines the lower part 6 of the reactor, while the portion 10 made of nickel alloys lines the upper part 5 of the reactor.

Although one does not wish to be constrained by particular theories, it is believed that the combination of titanium and nickel arranged in a lining as defined above leads to surprisingly advantageous results, since it optimizes the resistance of the lining to stress crevice corrosion and minimizes the risks and disadvantages that can be ascribed to a potential or actual continued exposure of the lining to pure oxygen.

Advantageously, in the lining there are no other types of metal, so that the lining is constituted substantially by two contiguous layers 10 and 11 of different alloys, wherein a lower region made of titanium is laterally adjacent to an upper region made of nickel.

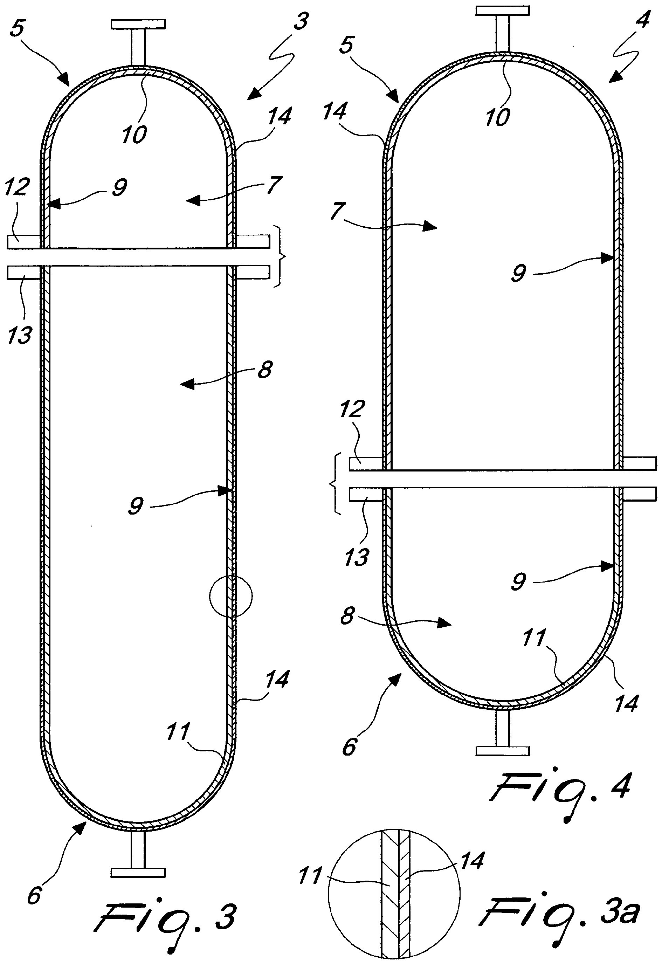

According to a preferred embodiment, the two regions, the lower one 6 and the upper one 5 of the apparatus, are prepared separately by covering two or more sections of substrate with a lining and are then mutually joined by means of any method known in the field for this purpose, such as for example flanging. Said flanging can be provided for example by using fastening elements that are known for this purpose, which are arranged at the level of two flanges (12 and 13 in Figure 4).

According to a preferred embodiment, the area 8 lined with titanium is advantageously comprised between 5% and 95% of the internal volume of the apparatus, while the area 7 lined with nickel is advantageously comprised between 5% and 95% of the internal volume of the apparatus. The lining and the apparatus are characterized by the simultaneous presence of two portions, respectively a portion made of titanium and another made of nickel, each of which covers advantageously at least 5% of the lining if the total internal volume of the apparatus is considered as 100. Preferred ratios between the areas lined with the two alloys are 10/90 and 20/80, wherein the larger portion can be equally titanium or nickel. The possibility to reverse the ratios between the titanium areas and the nickel areas is shown in the pairs of Figures 1-2 and 3-4.

The practical method by means of which the apparatus is provided is not an essential aspect of the invention, and therefore any method known in the field for this purpose can be used, on condition that it allows to provide a product that is suitable for its intended use. It should be noted in fact that in many processes and particularly in wet oxidation processes there are chemical and physical stresses such as high operating pressures. Therefore, the apparatus must be manufactured so as to withstand these pressures in order to allow it to be used in practice.

In the preferred case in which the apparatus that comprises the lining according to the invention is a reactor, even more preferably a reactor for wet oxidation, the apparatus can be provided by means of a method that provides for an initial plating of two separate sheets of substrate, respectively one with titanium and one with nickel. The thickness of the substrate plates to be plated is advantageously comprised between 20 and 150 mm.

In the case of reactors with a diameter of more than 1 meter (3 and 4), it is preferable to work directly the two lined plates, for example by calendering, so as to provide the two portions, the lower one and the upper one, of the walls of the reactor. The plated cylindrical portions are then joined, typically by flanging, so as to obtain the finished reactor.

For reactors having dimensions of less than 1 meter (1 and 2), particularly less than 800 mm, the diameter of the reactor is too small to allow to form the cylindrical body with the technologies known for this purpose. In this case, one uses advantageously a manufacturing method such as hot forcing, This procedure comprises a first step of anchoring the lining to a substrate that has a thickness typically comprised between 10 and 50 mm, preferably 25 mm. The individual lined sections constitute the internal portion of the reactor, and after being manufactured they are inserted while hot in a perforated external cylindrical jacket, typically made of non-plated steel, having a thickness comprised between 20 and 150 mm.

As mentioned, according to a highly preferred embodiment, the apparatus of the present invention is applied advantageously to a wet oxidation process of the conventional type.

However, It is possible to achieve even greater advantages if the conventional wet oxidation process is modified as disclosed in a co-pending patent application by the same Applicant.

Therefore, in another aspect, the present invention relates to a wet oxidation process, which comprises the step of introducing in an apparatus for wet oxidation as defined above two or more wastewaters that are mutually different at least in terms of input temperature and C.O.D.

The expression "oxidizable compound" is preferably used to designate any complex organic or inorganic compound that is present in the wastewaters to be treated and often has a high environmental toxicity. The oxidizable compound is advantageously degraded as a consequence of the oxidation of its structure, where said breakdown of the compound consists for example in breaking up the initial complex structure into structurally simpler fragments characterized by lower environmental toxicity. Degradation does not necessarily have to attain complete transformation of the compound into simple products such as carbon dioxide, water, molecular nitrogen, metallic oxides, nitrogen oxides or sulfur oxides and others.

The term "wastewater" is used to designate any reagent of a conventional wet oxidation process. For example, a wastewater is an aqueous mixture of one or more organic and/or inorganic pollutants (oxidizable compounds as defined above). The wastewater can be in any physical form, advantageously an aqueous suspension and solution. Moreover, the invention allows to treat both monostream and multistream wastewaters, where the term "monostream" is used to designate wastewater that originates from a single chemical process and comprises a single type of pollutant, whereas the term "multistream" is used to designate wastewater that originates from various productions and comprises various types of pollutants. Moreover, wastewaters according to the invention can comprise both oxidizable and non-oxidizable substances, wherein only the former are of course attacked by the oxygen.

The expression "input temperature" is used to designate the temperature of the wastewater when it is introduced in the apparatus.

The C.O.D. indirectly expresses the amount of heat that can be generated by a unit mass of the wastewater to which reference is made, since it includes the concentration and degree of oxidizability of the pollutants that are present. In other words, the C.O.D. describes the characteristics and concentration of the pollutants regardless of their chemical nature, their reactivity to oxidation and the enthalpic gain that arises from their complete oxidation.

Although it is preferable to introduce in the apparatus only two wastewaters, the method according to the invention allows to treat simultaneously even more than two wastewaters, on condition that within the pool of wastewaters that are introduced, at least two of them have mutually different input temperatures and C.O.D. values.

The wastewater input points are preferably "dedicated" in terms of temperature and C.O.D., in that an input point corresponds to the addition of a type of wastewater, be it a monostream or a multistream, that is characterized by a specific temperature/C.O.D. ratio.

Particularly advantageously, and considering the preferred case in which there are only two wastewaters, the wastewater having the higher temperature has a lower C.O.D. and is introduced in a point that lies closer to the input of the apparatus with respect to the colder wastewater, which has a higher C.O.D. Preferably, the input point of the wastewater having the higher temperature coincides with the input of the apparatus, which can be the base of the first or only reactor.

In the particularly preferred case in which the introduced wastewaters are two, the wastewater having the lower C.O.D. preferably has an input temperature comprised between 160 °C and 300 °C, even more preferably comprised between 200 °C and 280 °C, while the second (colder) wastewater having a higher C.O.D. preferably has an input temperature comprised between 10 °C and 160 °C, advantageously approximately 25 °C.

If the oxidation reaction is performed in batch mode, the subsequent addition or additions is, or are, preferably performed after an interval typically comprised between 5 and 10 minutes, so that the mixture inside the reactor can reach a sufficiently high level (typically a temperature comprised between 160°C and 300 °C).

In the particularly preferred case in which there are two input wastewaters, the wastewater having the higher temperature has a C.O.D. comprised between 10000 mg/l and 75000 mg/l, while the wastewater having the lower temperature has a C.O.D. comprised between 75000 mg/l and 300000 mg/l.

In the particularly preferred case in which there are two input wastewaters, the volume of the wastewater having the lower temperature is comprised between 2.5% and 35% of the wastewater having the lower C.O.D.

According to another embodiment of the invention, multiple wastewaters are introduced at gradually increasing heights from the bottom of the apparatus, so that the wastewater added in upper position utilizes, in order to be heated, the heat generated by the oxidation of the wastewaters introduced in points that lie below it. A greater distance from the input of the apparatus advantageously corresponds to a lower temperature and a higher C.O.D.

If the process is performed in continuous mode in multiple reactors connected in series, the addition of wastewaters at a lower temperature is performed advantageously after the first reactor.

A modified wet oxidation method according to any one of the new and inventive embodiments described above entails many advantages, one of the main ones being certainly the possibility to treat wastewaters characterized by a higher C.O.D. than wastewaters normally introduced at the input of the reactor.

It has in fact been found surprisingly that it is possible to use part of the heat produced by the oxidation of pollutants (measured by the C.O.D.) present in the initial wastewater to heat the wastewater added at a higher point to a temperature that is higher than the temperature simply required to trigger oxidation. In this way, the oxidation reaction itself proceeds rapidly and uniformly, allowing for example to treat highly concentrated wastewaters or to treat wastewaters that have pollutants that are particularly difficult to oxidize,

In any case, what has been obtained advantageously is the possibility to increase significantly the amount of pollutants disposed within the time unit, without modifying particularly the temperature gradient along the reactor or the volume of said wastewater. Considering that reactors for wet oxidation are adiabatic reactors, all this leads to a distinct improvement in the yields of the process without having to deal with the significant costs for adapting reactors to the higher flow-rates entailed by the dilution of concentrated wastewaters that would be necessary in order to make them acceptable to a reactor operated in a conventional manner.

An apparatus that comprises a lining, according to the invention, can perform a modified wet oxidation method as described if it also comprises means adapted to add the second wastewater, wherein said means comprise pumps, valves, flow-rate measurement and regulation devices, flow control valves, blocking and safety valves, etc, and are arranged above the base of said apparatus or at the input site of the first wastewater.

On the basis of the above, it is evident that the apparatus according to the invention inherently have many advantages if they are applied to a generic process that entails corrosion risks, but are even more advantageous if they are used to perform a conventional wet oxidation process or even more preferably if they are used in combination with a wet oxidation process that has the modifications described above.

Other characteristics and advantages of the present invention will become better apparent from the description of the following preferred embodiments, intended exclusively by way of non-limiting example.

### Example 1.

Some examples of alloys suitable for providing the invention are given hereafter:

**Group (A): titanium grades 1 and 3 (chemically pure titanium)**

| Elements contained | Grade 1 | Grade 3 |
|---|---|---|
| Nitrogen (max) | 0.03% | 0.05% |
| Carbon (max) | 0.08% | 0.08% |
| Hydrogen (max) | 0.015% | 0.015% |
| Iron (max) | 0.2% | 0.5% |
| Oxygen (max) | 0.18% | 0.40% |
| Titanium | remainder | remainder |

**Group (B): titanium grades 9 and 11 (Ti-Pd and Ti-Al-V alloys)**

| Elements contained | Grade 9 | Grade 11 |
|---|---|---|
| Nitrogen (max) | 0.03% | 0.05% |
| Carbon (max) | 0.08% | 0.08% |
| Hydrogen (max) | 0.015% | 0.015% |
| Iron (max) | 0.25% | 0.20% |
| Oxygen (max) | 0.15% | 0.18% |
| Aluminum (max) | 2.5%-3.5% | - |
| Vanadium (max) | 2.0%-3.0% | - |
| Palladium (max) | - | 0.12%-0.25% |
| Titanium | Remainder | Remainder |

**Group (C): nickel alloys**

| | NO6600 Inconel® | NO6022 Hastelloy C22® | NO8800 Incoloy® | NO8028 Sanicro 28® |
|---|---|---|---|---|
| Ni | 72.0% min | Remaining Ni | Ni from 30.0 to 35.0% | Ni 31% |
| Cr | 14.0%-17.0% | Cr from 20.0 to 22.5% | Cr from 19.0 to 23.0% | Cr 27% |
| Fe | 6.0%-10.0% | Fe from 2.0 to 6.0% | Fe 39.5% | - |
| Mn | 1.0% max | Mn 0.50% | Mn 1.5% | - |
| C | 0.15% max | C 0.015% | C (max) 0.10% | C less than 0.02% |
| Cu | 0.5% max | - | Cu (max) 0.75% | Cu traces |
| Si | 0.5% max | Si 0.08% | Si (max) 1.0% | - |
| S | 0.15% max | S 0.02% | S (max) 0.015%% | - |
| | - | W from 2.5 to 3.5% | - | - |
| | - | Co 2.5% | - | - |
| | - | V 0.35% | - | - |
| | - | P 0.02% | - | - |
| | - | - | Al from 19.0 to 23.0% | - |

| N06600 Inconel® | | NO6022 Hastelloy C22® | NO8800 Incoloy® | NO8028 Sanicro 28® |
|---|---|---|---|---|
| - | | - | Ti from 0.16 to 0.60% | - |
| - | | - | - | Mo 3.5% |

### Example 2

A wet oxidation plant in which pure oxygen is used to treat the wastewater of a chemical factory, characterized by the following parameters:
C.O.D.: 20000-40000 mg/l,
chlorides: 25000-50000 mg/l (as Cl⁻),
sulfates: 5000-25000 mg/l (as SO₄²⁻),
suspended solids: 1000-5000 mg/l.

The reaction parameters are:
temperature: 250-310 °C,
pressure: 100-150 bars.

The reactor, having an inside diameter of approximately 0.5 m and a height of approximately 8 m, is lined originally with an internal lining made of Hastelloy C4® (NO6455) and provided by means of the hot forcing technique. After one year of operation, however, the reactor had evident signs of pitting and SCC (stress crevice corrosion) in the lower part. After two years, corrosion was such as to recommend replacing the damaged portion of the lining. The reactor was repaired repeatedly, with long downtimes and considerable operating difficulties due to the complexity of this operation.

A new portion of reactor having the same diameter and a length of approximately 1 meter was then added to the lower part of the reactor, said portion being plated with the forcing method with a lining of grade 2 titanium having a thickness of 4.75 mm.

Since the titanium lining was limited to the lower part of the reactor, it was found that during normal operation, as well as in shutdown and/or stop conditions, the titanium had not made direct contact with oxygen-rich gases. After application of the second titanium portion, no further corrosion (pitting) and SCC phenomena were registered.

### Example 3

A wet oxidation plant which treats with pure oxygen the wastewater of a chemical factory and various aqueous wastewaters of external origin, characterized by the following parameters:
C.O.D.: 20000-65000 mg/l,
chlorides: 20000-50000 mg/l (as Cl⁻),
sulfates: 5000-20000 mg/l (as SO₄²⁻),
suspended solids: 1000-15000 mg/l.

The reaction parameters are:
temperature: 250-310 °C,
pressure: 110-150 bars.

The plant worked with four reactors in series, each having an internal diameter of 0.75 m and a height of approximately 8 m and being lined originally with a Hastelloy C22® lining and manufactured with the hot forcing technique.

After one year of operation, the first reactor had evident signs of pitting and SCC in its lower part. After two years, corrosion on the first reactor was such as to recommend replacing the damaged portion of the lining and affected, albeit less dramatically, also the lower portions of the three subsequent reactors.

In the first reactor, the internal lining was replaced completely with a grade 11 titanium lining having a thickness of 6.35 mm, produced by hot forcing. An upper portion, approximately 1 m long, lined with the hot forcing method with an internal lining made of Hastelloy C22® and having a thickness of 6.35 mm, was then added,

The subsequent reactors received the addition, in a downward region, of a new portion of reactor having the same diameter and a length of approximately 1 m, with an internal lining made of grade 11 titanium (thickness 6.35 mm), provided by means of the hot forcing method.

After these operations, the result was achieved of avoiding corrosion problems, at the same time avoiding the possibility of direct contact between titanium and oxygen-rich gases during abnormal or transient operating conditions.

### Example 4

A plant for overflow biological sludge, which treats with pure oxygen biological sludge characterized by the following parameters:
C.O.D.: 30000-80000 mg/l,
chlorides: 1200-5000 mg/l (as Cl⁻),
sulfates: 2000-5000 mg/l (as SO₄²⁻),
suspended solids: 25000-85000 mg/l.

The reaction parameters were:
temperature: 185-260 °C,
pressure: 30-65 bars.

Despite the low chloride content, the high concentration of the solid substances that were present led to expect important deposits on the lower part of the reactor, with consequent forming of corrosion phenomena both in terms of SCC and in terms of pitting on normal nickel alloys.

The reactor, having an inside diameter of approximately 0.5 m and a height of approximately 6 m, was therefore provided in two segments: the upper one, approximately 7 m long, was plated with the hot forcing technique with a lining made of Hastelloy C4® and a thickness of approximately 3 mm.

The lower part, along the remaining approximately 1 m, was plated with the hot forcing technique with a grade 2 titanium lining having a thickness of approximately 3 mm. After two years of operation, there are neither signs of pitting nor signs of SCC in any part of the reactor, thus confirming the effectiveness of the invention.

Although only some preferred embodiments of the invention have been described in the text, the person skilled in the art will understand immediately that it is in any case possible to obtain other embodiments that are equally advantageous and preferred.

The disclosures in Italian Patent Application No. MI2004A001240 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus comprising a lining, particularly for use in performing oxidation processes, **characterized in that** it comprises a lower internal portion, which is lined with at least one alloy selected from the group that comprises titanium and alloys thereof, and an upper internal portion, which is lined with at least one alloy selected from the group that comprises nickel alloys.

2. The apparatus according to claim 1, **characterized in that** said lower portion lined with titanium or alloys thereof is comprised between 5% and 95% of the total internal volume of said apparatus, and wherein said upper portion lined with nickel alloys is comprised between 95% and 5% of the total internal volume of said apparatus.

3. The apparatus according to any one of claims land 2, **characterized in that** the ratio between the surfaces lined respectively with titanium or alloys thereof and the surfaces lined with nickel alloys is selected between 10/90, 20/80, 90/10, and 80/20.

4. The apparatus according to claim 1, **characterized in that** it further comprises means for adding two or more wastewaters inside said apparatus.

5. The apparatus according to claim 4, **characterized in that** the means suitable for introducing the wastewaters after the first one are arranged above the input site of the first wastewater and comprise pumps, valves, flow-rate measurement and adjustment devices, and flow control, blocking and safety valves.

6. The apparatus according to claim 1, **characterized in that** the titanium and alloys thereof are selected from the group that consists of titanium grades 1 to 4 (chemically pure titanium), titanium grades 7 to 11 (alloys of titanium, palladium, aluminum and vanadium) and grade 45 titanium (titanium-niobium alloys) and mixtures thereof.

7. The apparatus according to claim 1, **characterized in that** the nickel alloy comprises nickel in a concentration at least equal to 30% by weight, preferably in a concentration comprised between 30% and 75% by weight.

8. The apparatus according to claim 7, **characterized in that** the nickel alloy is selected from the group that consists of a nickel-chromium alloy and a nickel-chromium-molybdenum alloy.

9. The apparatus according to claim 8, **characterized in that** the nickel alloy is selected from the group that consists of Sanicro alloys, preferably Sanicro 28, Incoloy alloys, preferably N08800, Inconel alloys, preferably N06600, Hastelloy alloys, preferably NO10276, N06022, NO6455 and N06059.

10. The apparatus according to claim 1, **characterized in that** said lining comprises two surfaces having a variable thickness, a first one of which is constituted by titanium or alloys thereof, a second surface being constituted by at least one nickel alloy.

11. The apparatus according to claim 10, **characterized in that** the two surfaces are two physically separate layers arranged side-by-side, so as to form a first portion that comprises titanium or alloys thereof and a second portion that comprises at least one nickel alloy.

12. The apparatus according to claim 11, **characterized in that** the layers have a thickness of at least 0.75 millimeters, preferably comprised between 0.75 and 12.7 millimeters, more preferably equal to 5 millimeters.

13. The apparatus according to claim 12, **characterized in that** the thickness of the layers is not uniform in all the regions of the lining.

14. The apparatus according to claim 1 **characterized in that** it comprises said lining lined on a substrate for providing the apparatus, said substrate being selected among carbon steels, carbon-manganese steels and low-carbon steels.

15. The apparatus according to claim 14, **characterized in that** the lining and the substrate are combined by plating.

16. A wet oxidation method, **characterized in that** it comprises the step of introducing, in an apparatus according to claim 4, two or more wastewaters that are mutually different at least in terms of input temperature and C.O.D.

17. The method according to claim 16, **characterized in that** the wastewater that has the higher C.O.D. has a lower temperature than the other wastewater.

18. The method according to claim 16, **characterized in that** the wastewater having the lower C.O.D. is introduced in a point that lies closer to the input of the apparatus with respect to the wastewater having a higher C.O.D.

19. The method according to claim 16, **characterized in that** the wastewater having the lower C.O.D. is introduced at the inlet of the apparatus.

20. The method according to claim 16, **characterized in that** the wastewater having the higher temperature has an input temperature comprised between 160 deg. C and 300 deg. C, more preferably comprised between 200 deg. C and 280 deg. C.

21. The method according to claim 16, **characterized in that** the wastewater having the lower temperature has an input temperature comprised between 10 deg. C and 160 deg. C, advantageously equal to approximately 25 deg. C.

22. The method according to claim 16, **characterized in that** the wastewater having the higher temperature has a C.O.D. comprised between 10000 mg/l and 75000 mg/l.

23. The method according to claim 16, **characterized in that** the wastewater having the lower temperature has a C.O.D. comprised between 75000 mg/l and 300000 mg/l.

24. The method according to claim 16, **characterized in that** the input volume of wastewater having a higher C.O.D. is comprised between 2.5% and 35% of the volume of the wastewater having a lower C.O.D.

## Patentansprüche

1. Eine Vorrichtung umfassend eine Auskleidung, insbesondere für die Verwendung in der Durchführung von Oxidationsprozessen, **dadurch gekennzeichnet, dass** sie einen unteren internen Teil umfasst, der mit mindestens einer Legierung ausgekleidet ist, gewählt aus der Gruppe, die Titan und Legierungen davon umfasst, und einen oberen internen Teil, der mit mindestens einer Legierung ausgekleidet ist, gewählt aus der Gruppe, die Nickellegierungen umfasst.

2. Die Vorrichtung gemäß Anspruch 1, **dadurch gekennzeichnet, dass** der untere Teil, ausgekleidet mit Titan oder Legierungen davon, zwischen 5 und 95% des gesamten internen Volumens der Vorrichtung umfasst, und worin der obere Teil, ausgekleidet mit Nickellegierungen, zwischen 95% und 5% des gesamten internen Volumens der Vorrichtung umfasst.

3. Die Vorrichtung gemäß irgendeinem der Ansprüche 1 und 2, **dadurch gekennzeichnet, dass** das Verhältnis zwischen den Oberflächen, ausgekleidet mit Titan bzw. Legierungen davon, und den Oberflächen, ausgekleidet mit Nickellegierungen, gewählt ist zwischen 10/90, 20/80, 90/10 und 80/20.

4. Die Vorrichtung gemäß Anspruch 1, **dadurch gekennzeichnet, dass** sie weiter Mittel zum Hinzufügen von zwei oder mehr Abwässern im Innern der Vorrichtung umfasst.

5. Die Vorrichtung gemäß Anspruch 4, **dadurch gekennzeichnet, dass** die Mittel geeignet zum Einführen der Abwässer nach dem ersten oberhalb der Einlassstelle des ersten Abwassers angeordnet sind und Pumpen, Ventile, Fließgeschwindigkeitsmessungs- und Einstellungsvorrichtungen, und Fließkontroll-, Blockier- und Sicherheitsventile umfassen.

6. Die Vorrichtung gemäß Anspruch 1, **dadurch gekennzeichnet, dass** das Titan und die Legierungen davon gewählt sind aus der Gruppe, die aus Titangraden 1 bis 4 (chemisch reinem Titan), Titangraden 7 bis 11 (Legierungen aus Titan, Palladium, Aluminium und Vanadium) und Grad 45 Titan (Titan-Niob-Legierungen) und Mischungen daraus besteht.

7. Die Vorrichtung gemäß Anspruch 1, **dadurch gekennzeichnet, dass** die Nickellegierung Nickel in einer Konzentration mindestens gleich 30 Gewichts%, vorzugsweise in einer Konzentration zwischen 30 Gewichts% und 75 Gewichts% umfasst.

8. Die Vorrichtung gemäß Anspruch 7, **dadurch gekennzeichnet, dass** die Nickellegierung gewählt ist aus der Gruppe, die aus einer Nickel-Chrom-Legierung und einer Nickel-Chrom-Molybdän-Legierung besteht.

9. Die Vorrichtung gemäß Anspruch 8, **dadurch gekennzeichnet, dass** die Nickellegierung gewählt ist aus der Gruppe, die aus Sanicro-Legierungen besteht, vorzugsweise Sanico 28, Incoloy-Legierungen, vorzugsweise N08800, Inconel-Legierungen, vorzugsweise N06600, Hastelloy-Legierungen, vorzugsweise NO10276, N06022, NO6455 und N06059.

10. Die Vorrichtung gemäß Anspruch 1, **dadurch gekennzeichnet, dass** die Auskleidung zwei Oberflächen mit einer variablen Dicke umfasst, wovon eine erste aus Titan oder Legierungen davon gebildet ist, eine zweite Oberfläche aus mindestens einer Nickellegierung gebildet ist.

11. Die Vorrichtung gemäß Anspruch 10, **dadurch gekennzeichnet, dass** die zwei Oberflächen zwei physikalisch separate Schichten sind, nebeneinander angeordnet, um einen ersten Teil zu bilden, der Titan oder Legierungen davon umfasst, und einen zweiten Teil, der mindestens eine Nickellegierung umfasst.

12. Die Vorrichtung gemäß Anspruch 11, **dadurch gekennzeichnet, dass** die Schichten eine Dicke von mindestens 0,75 Millimetern haben, vorzugsweise zwischen 0,75 und 12,7 Millimetern, noch bevorzugter gleich 5 Millimetern.

13. Die Vorrichtung gemäß Anspruch 12, **dadurch gekennzeichnet, dass** die Dicke der Schichten nicht in allen Regionen der Auskleidung gleichförmig ist.

14. Die Vorrichtung gemäß Anspruch 1, **dadurch gekennzeichnet, dass** sie die Auskleidung ausgekleidet auf einem Substrat zur Bereitstellung der Vorrichtung umfasst, wobei das Substrat gewählt ist aus Kohlenstoffstahlen, Kohlenstoff-Manganstahlen und Kohlenstoff-armen Stahlen.

15. Die Vorrichtung gemäß Anspruch 14, **dadurch gekennzeichnet, dass** die Auskleidung und das Substrat durch Plattierung kombiniert sind.

16. Ein feuchtes Oxidationsverfahren, **dadurch gekennzeichnet, dass** es den Schritt Einführen, in eine Vorrichtung gemäß Anspruch 4, von zwei oder mehr Abwässern umfasst, welche gegenseitig zumindest hinsichtlich Eingangstemperatur und C.O.D. unterschiedlich sind.

17. Das Verfahren gemäß Anspruch 16, **dadurch gekennzeichnet, dass** das Abwasser, welches den höheren C.O.D. hat, eine niedrigere Temperatur hat als das andere Abwasser.

18. Das Verfahren gemäß Anspruch 16, **dadurch gekennzeichnet, dass** das Abwasser, das den niedrigeren C.O.D. hat, an einem Punkt eingeführt wird, der näher am Einlass der Vorrichtung liegt, in Bezug auf das Abwasser, das einen höheren C.O.D. hat.

19. Das Verfahren gemäß Anspruch 16, **dadurch gekennzeichnet, dass** das Abwasser, das den niedrigeren C.O.D. hat, am Einlass der Vorrichtung eingeführt wird.

20. Das Verfahren gemäß Anspruch 16, **dadurch gekennzeichnet, dass** das Abwasser mit der höheren Temperatur eine Eingangstemperatur zwischen 160°C und 300°C, bevorzugter zwischen 200°C und 280°C hat.

21. Das Verfahren gemäß Anspruch 16, **dadurch gekennzeichnet, dass** das Abwasser mit der niedrigeren Temperatur eine Eingangstemperatur zwischen 10°C und 160°C, vorteilhafterweise gleich ungefähr 25°C hat.

22. Das Verfahren gemäß Anspruch 16, **dadurch gekennzeichnet, dass** das Abwasser mit der höheren Temperatur einen C.O.D. zwischen 10000 mg/l und 75000 mg/l hat.

23. Das Verfahren gemäß Anspruch 16, **dadurch gekennzeichnet, dass** das Abwasser mit der niedrigeren Temperatur einen C.O.D. zwischen 75000 mg/l und 300000 mg/l hat.

24. Das Verfahren gemäß Anspruch 16, **dadurch gekennzeichnet, dass** das Eingangsvolumen des Abwassers mit einem höheren C.O.D. zwischen 2,5% und 35% des Volumens des Abwassers mit einem niedrigeren C.O.D. beträgt.

## Revendications

1. Appareil comportant un revêtement, en particulier destiné à la réalisation de processus d'oxydation, **caractérisé en ce qu'**il comporte une partie interne inférieure, qui est revêtue d'au moins un alliage choisi parmi le titane et des alliages de celui-ci, et une partie interne supérieure, qui est revêtue d'au moins un alliage choisi parmi des alliages de nickel.

2. Appareil selon la revendication 1, **caractérisé en ce que** ladite partie inférieure revêtue de titane ou d'alliages de celui-ci représente de 5 % à 95 % du volume intérieure total dudit appareil, et dans lequel ladite partie supérieure revêtue d'alliages de nickel représente de 95 % à 5 % du volume intérieur total dudit appareil.

3. Appareil selon l'une quelconque des revendications 1 et 2, **caractérisé en ce que** le rapport entre les surfaces respectivement revêtues de titane ou d'alliages de celui-ci et les surfaces revêtues d'alliages de nickel est choisi entre 10/90, 20/80, 90/10 et 80/20.

4. Appareil selon la revendication 1, **caractérisé en ce qu'**il comporte en outre des moyens pour ajouter deux ou plus de deux effluents à l'intérieur dudit appareil.

5. Appareil selon la revendication 4, **caractérisé en ce que** les moyens permettant d'introduire les effluents après le premier sont disposés au-dessus du point d'entrée du premier effluent et comprennent des pompes, des vannes, des dispositifs de mesure et de réglage de débit et des vannes de régulation de débit, d'arrêt et de sûreté.

6. Appareil selon la revendication 1, **caractérisé en ce que** le titane et les alliages de celui-ci sont choisis dans le groupe composé de titane de nuance 1 à 4 (titane chimiquement pur), de titane de nuance 7 à 11 (alliages de titane, de palladium, d'aluminium et de vanadium) et de titane de nuance 45 (alliages titane-niobium) et de mélanges de ceux-ci.

7. Appareil selon la revendication 1, **caractérisé en ce que** l'alliage de nickel contient du nickel à une concentration au moins égale à 30 % en poids, de préférence à une concentration de 30 % à 75 % en poids.

8. Appareil selon la revendication 7, **caractérisé en ce que** l'alliage de nickel est choisi dans le groupe composé d'un alliage nickel-chrome et d'un alliage nickel-chrome-molybdène.

9. Appareil selon la revendication 8, **caractérisé en ce que** l'alliage de nickel est choisi dans le groupe composé d'alliages Sanicro, de préférence Sanicro 28, d'alliages Incoloy, de préférence N08800, d'alliages Inconel, de préférence N06600, d'alliages Hastelloy, de préférence NO10276, N06022, NO6455 et N06059.

10. Appareil selon la revendication 1, **caractérisé en ce que** ledit revêtement comprend deux surfaces d'épaisseur variable, dont une première est constituée de titane ou d'alliages de celui-ci, une seconde surface étant constituée d'au moins un alliage de nickel.

11. Appareil selon la revendication 10, **caractérisé en ce que** les deux surfaces sont deux couches séparées physiquement, disposées côte-à-côte de manière à former une première partie qui contient du titane ou des alliages de celui-ci et une seconde partie qui contient au moins un alliage de nickel.

12. Appareil selon la revendication 11, **caractérisé en ce que** les couches ont une épaisseur d'au moins 0,75 millimètre, de préférence de 0,75 à 12, 7 millimètres, de préférence encore égale à 5 millimètres.

13. Appareil selon la revendication 12, **caractérisé en ce que** l'épaisseur des couches n'est pas uniforme dans toutes les zones du revêtement.

14. Appareil selon la revendication 1, **caractérisé en ce qu'**il comporte ledit revêtement appliqué sur un substrat pour réaliser l'appareil, ledit substrat étant choisi parmi des aciers au carbone, des aciers au carbone-manganèse et des aciers à faible teneur en carbone.

15. Appareil selon la revendication 14, **caractérisé en ce que** le revêtement et le substrat sont combinés par placage.

16. Procédé d'oxydation par voie humide, **caractérisé en ce qu'**il comporte l'étape d'introduction, dans un appareil selon la revendication 4, de deux ou plus de deux effluents mutuellement différents au moins en ce qui concerne la température d'entrée et la DCO.

17. Procédé selon la revendication 16, **caractérisé en ce que** l'effluent qui a la DCO la plus forte a une température inférieure à celle de l'autre effluent.

18. Procédé selon la revendication 16, **caractérisé en ce que** l'effluent qui a la DCO la plus faible est introduit à un endroit situé plus près de l'entrée de l'appareil en comparaison de l'affluent qui a la DCO la plus forte.

19. Procédé selon la revendication 16, **caractérisé en ce que** l'effluent qui a la DCO la plus faible est introduit à l'entrée de l'appareil.

20. Procédé selon la revendication 16, **caractérisé en ce que** l'effluent qui a la température la plus haute a une température d'entrée de 160°C à 300°C, de préférence encore de 200°C à 280°C.

21. Procédé selon la revendication 16, **caractérisé en ce que** l'effluent qui a la température la plus basse a une température d'entrée de 10°C à 160°C, avantageusement égale à environ 25°C.

22. Procédé selon la revendication 16, **caractérisé en ce que** l'effluent qui a la température la plus haute a une DCO de 10 000 mg/l à 75 000 mg/l.

23. Procédé selon la revendication 16, **caractérisé en ce que** l'effluent qui a la température la plus basse a une DCO de 75 000 mg/l à 300 000 mg/l.

24. Procédé selon la revendication 16, **caractérisé en ce que** le volume d'entrée de l'effluent qui la DCO la plus forte est de 2,5 % à 35 % du volume du l'effluent qui a la DCO la plus faible.
